# EUROPÄISCHE PATENTSCHRIFT

(11) **EP 2 051 102 B1**
(45) Veröffentlichungstag und Bekanntmachung des Hinweises auf die Patenterteilung: **05.12.2012**
(21) Anmeldenummer: 08166666.1
(22) Anmeldetag: 15.10.2008
(51) Int. Cl.: G01S 7/497, G01S 7/481, G01S 17/08

(54) **Justierbares elektro-optisches Messgerät**
Adjustable electro-optical measuring device
Appareil de mesure électro-optique ajustable

(30) Priorität: 18.10.2007 CH 16232007
(43) Veröffentlichungstag der Anmeldung: 22.04.2009
(73) Patentinhaber: Leica Geosystems AG, 9435 Heerbrugg (CH)
(72) Erfinder: Bösch, Thomas, A-6890 Lustenau (AT)
(74) Vertreter: Kaminski Harmann

(56) Entgegenhaltungen:
- EP-A- 1 351 070
- WO-A-03/087718
- WO-A-2007/033860
- DE-A1- 10 157 378
- DE-U1- 29 903 374
- US-A- 5 900 931
- US-A- 5 959 789
- US-A- 5 999 346
- US-A1- 2006 137 194
- US-A1- 2006 268 261
- US-B1- 6 832 729
- WALUKAS D ET AL: "LE THIXOMOULAGE: POSSIBILITES OFFERTES PAR LA TECHNIQUE ET APPLICATIONS PRATIQUES//THIXOMOLDING: TECHNOLOGY OPPORTUNITIES AND PRACTICAL USES" 1. April 2002 (2002-04-01), FONDERIE, FONDEUR D'AUJOURD'HUI, EDITIONS TECHNIQUES DES INDUSTRIES DE LA FONDERIE, SEVRES, FR, PAGE(S) 30 - 36 , XP001125186 ISSN: 0249-3136 * das ganze Dokument *

## Beschreibung

Die Erfindung betrifft ein elektro-optisches Messgerät nach dem Oberbegriff des Anspruchs 1.

Bei elektro-optischen Messgeräten, die einen optischen Sendepfad mit zumindest einem optischen Sender sowie einen optischen Empfangspfad mit zumindest einer Empfangsoptik aufweisen, werden im Üblichen Komponenten von Sende- und Empfangspfad auf einem dafür vorgesehenen, stabilen Optik-Trägerkörper befestigt. Dabei ist es wichtig, dass die optische Achse dieses Optik-Trägerkörpers nach einem Einbau in das Messgerätgehäuse parallel zur Längsachse des Messgerätgehäuses verläuft, sodass beispielsweise bei handgehaltenen Messgeräten ein intuitives und einfaches Anzielen eines Messzieles durch einen Benutzer erreicht werden kann. Im Üblichen werden der Optik-Trägerkörper und das Gehäuse so gefertigt und zusammengebaut, dass die optische Achse des Optik-Trägerkörpers parallel zur Gerätelängsachse verläuft. Allerdings kann es bei der Fertigung der Teile oder bei der Montage zu Abweichungen kommen, sodass die optische Achse nicht exakt wie gewünscht ausgerichtet ist. Dies kann zu Messungenauigkeiten oder Messfehlern führen.

Ebenso kommt es insbesondere durch thermische oder mechanische Verformungen des Optik-Trägerkörpers oder des Messgerätgehäuses vor, dass die optische Achse des Optik-Trägerkörpers nicht mehr wie gewünscht parallel zur Gerätelängsachse verläuft und somit die Messstrahlen nicht mehr parallel zu dieser ausgesendet werden. Da bei Messgeräten des Standes der Technik die optische Achse des Optik-Trägerkörpers relativ zum Gehäuse nicht nachjustierbar ist, sind solche Fehler bei bekannten Messgeräten schwer oder gar nicht behebbar.

Beispielsweise sind handgehaltene Laserentfernungsmesser als elektro-optische Messgeräte bekannt, bei welchen durch den Sender ausgesendete Messstrahlen an einem zu vermessenden Objekt reflektiert werden und die reflektierten Messstrahlen durch die Empfangsoptik auf einen Empfänger gelenkt bzw. gebündelt werden. Durch Auswertung des Empfängersignals kann dabei anhand des Laufzeit- oder Phasenmessprinzips die Entfernung vom Messgerät zum zu vermessenden Objekt bestimmt werden.

Der Erfindung liegt somit die Aufgabe zugrunde, ein verbessertes elektro-optisches Messgerät bereitzustellen.

Eine weitere Aufgabe der Erfindung ist das Bereitstellen eines elektro-optischen Messgeräts, insbesondere eines handgehaltenen Laserentfernungsmessers, mit einem Optik-Trägerkörper, dessen optische Achse relativ zum Messgerätgehäuse verbessert justierbar und insbesondere nachjustierbar ist.

Diese Aufgabe wird durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Das erfindungsgemäße elektro-optische Messgerät weist einen optischen Sendepfad mit zumindest einem optischen Sender zur Aussendung eines Messsignals sowie einen Empfangspfad mit zumindest einer Empfangsoptik zur Bündelung eines Messsignals in Richtung auf einen Empfänger auf. Des Weiteren besitzt das elektro-optische Messgerät einen Optik-Trägerkörper, der Komponenten des Sende- und Empfangspfads aufnimmt und der sich in einem Messgerätgehäuse befindet. Der Optik-Trägerkörper und das Messgerätgehäuse sind dabei erfindungsgemäss so ausgebildet, dass der Optik-Trägerkörper relativ zum Messgerätegehäuse geringfügig kippbar ist, wobei unter einer geringfügigen Kippbarkeit des Optik-Trägerkörpers eine Kippbarkeit um wenige Grad, z.B. höchstens 5 Grad, zu verstehen ist. Durch die Kippbarkeit des Optik-Trägerkörpers ist dessen optische Achse in einer - insbesondere vertikalen - Ebene justierbar, sodass bei oder nach einem Einbau des Optik-Trägerkörpers in das Gehäuse die optische Achse des Optik-Trägerkörpers parallel zur Gerätelängsachse einstellbar ist.

Insbesondere kann dabei der Optik-Trägerkörper derart im Messgerätgehäuse gelagert sein, dass er um eine Achse herum kippbar ist. Beispielsweise kann der Optik-Trägerkörper dafür zwei kleine, an gegenüberliegenden Seiten ausgeformte Stifte aufweisen, die die Achse bilden und bei der Montage des Optik-Trägerkörpers in eine dafür vorgesehene Einbuchtung im Messgerätgehäuse geclippt werden können.

Zum Einstellen einer Kippstellung weist beispielsweise der Optik-Trägerkörper eine Öse auf, durch welche eine Stellschraube in das Messgerätgehäuse gedreht werden kann. Mittels Verstellen der Stellschraube kann somit eine Kippstellung des Optik-Trägerkörper relativ zum Gehäuse verändert und dadurch die optische Achse justiert werden.

Zusätzlich kann der Optik-Trägerkörper an der in Messrichtung zeigenden Seite mit formflexiblem Schaumgummi ausgekleidet sein, sodass er sitzfest und dennoch beweglich derart im Gehäuse gelagert ist, dass die Kippbarkeit gewährleistet wird.

Erfindungsgemäss kann nun ein Messgerät mit einer wenig aufwändig und exakt justierbaren - sowie nachjustierbaren - optischen Achse bereitgestellt werden, sodass ein verbessertes intuitives Zielen ermöglicht wird. Weist das Messgerät einen am Gehäuse fixierten Neigungssensor und eine Schrägmessfunktion auf, ist eine exakt justierte optische Achse besonders wichtig, da ansonsten bei einem schrägen Anmessen eines Objektes zwischen der Schräge, die der Neigungssensor misst, und der Schräge der optischen Achse Diskrepanzen bestehen können, was zu ungenauen Messwerten führt.

Ebenso kann auch direkt am Optik-Trägerkörper ein Neigungssensor angebracht sein, sodass direkt die Neigung des Optik-Trägerkörpers messbar und somit dessen optische Achse genau justierbar ist.

Der Optik-Trägerkörper kann dabei in sämtlichen nach dem Stand der Technik bekannten Formen und insbesondere einstückig ausgebildet sein, sodass er sich zum Tragen von Komponenten von Sende- und Empfangspfad eignet. Vorteilhaft kann dabei der Optik-Trägerkörper aus mittels Thixomolding ausgeformtem Leichtmetall, insbesondere einer Magnesium-oder Aluminiumlegierung, sein. Dies gewährleistet einen leichten und dennoch sehr stabilen und langlebigen Optik-Trägerkörper, wobei auch feine Strukturen mit geringeren Toleranzen formbar sind. Zusätzlich kann bei mittels Thixomolding ausgeformtem Optik-Trägerkörpern auf eine spanende Nachbearbeitung, die oftmals bei nach dem Stand der Technik bekannten, mittels Druckguss urgeformten Metall-Optik-Trägern erforderlich ist, verzichtet werden.

Beispielsweise können bei diesem Herstellungsverfahren die Stellschraubenöse und die Stifte des Optik-Trägerkörpers sehr detailgenau geformt werden, wobei durch die dabei erreichbare hohe Stabilität einem Wegbrechen dieser Teile entgegengewirkt werden kann.

Insbesondere weist der Optik-Trägerkörper eine Aufnahme für den optischen Sender, beispielsweise eine Laserdiode, und eine Aufnahme für ein Austrittsfenster für die Sendestrahlen auf, wobei dazwischen ein zylinderförmiger Sendekanal, in welchem die Sendestrahlen verlaufen, geformt sein kann. Des Weiteren kann auch zwischen einer Aufnahme für die Empfangsoptik, wie einer Empfangslinse, und dem Empfänger ein Tubus ausgeformt sein, der insbesondere parallel zum Sendekanal angeordnet ist.

In einer weiteren Ausführungsform kann der Optik-Trägerkörper auch derart im Messgerätgehäuse befestigt bzw. gelagert sein, dass er beispielsweise um zwei Achsen geringfügig schwenkbar ist und sodass die optische Achse des Optik-Trägerkörper in mehreren Ebenen, z.B. in einer vertikalen und einer horizontalen Ebene, justiert werden kann.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein handgehaltenes Laserentfernungsmessgerät als elektro-optisches Messgerät;

- Fig. 2: einen erfindungsgemässen Optik-Trägerkörper, der seitliche Stifte und eine Stellschraubenöse aufweist; und
- Fig. 3: den in Figur 2 gezeigten Optik-Trägerkörper eingebaut in einem ohne Deckel dargestellten Messgerätgehäuse; und
- Fig. 4: ein Längsschnitt eines erfindungsgemässen Optik Trägerkörpers eingebaut in ein Messgerätgehäuse.

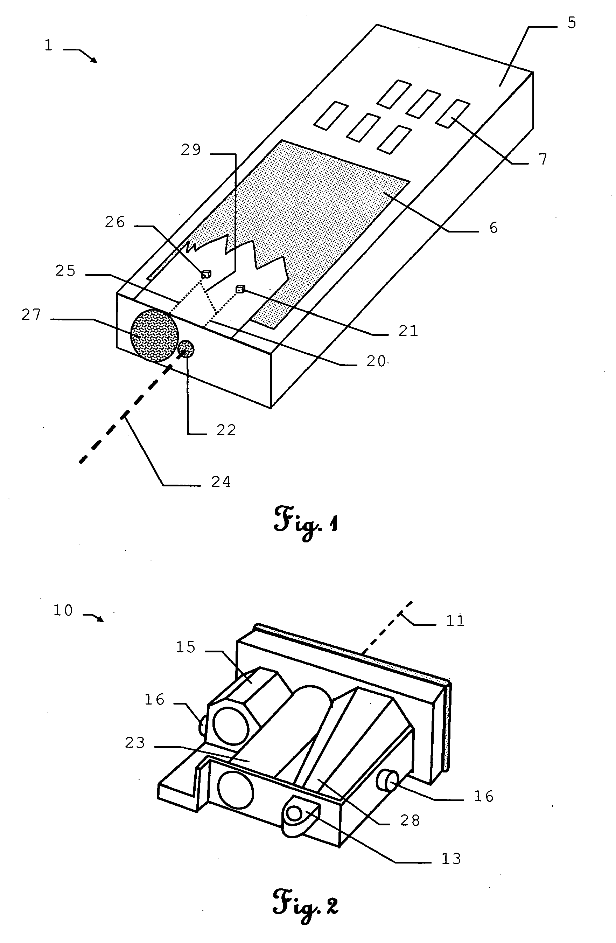

Figur 1 zeigt ein als handgehaltenes Laserentfernungsmessgerät ausgeführtes elektro-optisches Messgerät 1. Dieses weist ein Gehäuse 5 und Betätigungselemente 7 zum Ein- bzw. Ausschalten des Entfernungsmessgeräts sowie zum Starten bzw. Konfigurieren eines Messvorgangs auf. Neben den Betätigungselementen 7 besitzt das Messgerät ein Display 6 zur Wiedergabe von Messergebnissen und Angaben des Gerätestatus. Schematisch und prinzipiell angedeutet weist das Gerät einen Sendepfad 20 mit einem Sender 21 zur Aussendung von optischen Messstrahlen 24 und einem Austrittsfenster 22 für die Messstrahlen 24 sowie einen Empfangspfad 25 mit einem Empfänger 26 und einer Empfangsoptik 27 auf.

Der Sender 21, das Austrittsfenster 22, der Empfänger 26 und die Empfangsoptik 27 sind innerhalb des Gehäuses an einem erfindungsgemäss geringfügig relativ zum Gehäuse 5 kippbaren und somit justierbaren Optik-Trägerkörper 10 befestigt. Der Optik-Trägerkörper 10 liegt dabei so im Gehäuse 5, dass das Austrittsfenster 22 und die Empfangsoptik 27 jeweils hinter Öffnungen des Gehäuses 5 angeordnet sind.

Der Optik-Träger 10 weist, in noch zu beschreibender Weise, einen - beispielsweise zylindrisch geformten - Sendekanal zwischen Sender und Austrittsfenster 22 sowie einen Empfangskanal zwischen Empfangsoptik 27 und Empfänger auf, wobei im Empfangskanal gegebenenfalls ein Umlenkmittel zum Umlenken des empfangenen Strahls auf den Empfänger angeordnet sein kann. Zusätzlich ist der Optik-Trägerkörper so ausgebildet, dass ein Teil der Sendestrahlen als Referenzstrahlen 29 vor Austritt aus dem Gerät auf den Empfänger gelenkt werden.

Die Messung von Distanzen erfolgt nach aus dem Stand der Technik bekannten Prinzipien, wie z.B. dem Pulslaufzeit- oder Phasenvergleichsprinzip.

Der Laserentfernungsmesser kann ausserdem weitere aus dem Stand der Technik bekannte und fachübliche Komponenten und/oder Funktionen aufweisen.

Figur 2 zeigt eine perspektivische Ansicht eines Ausführungsbeispiels eines erfindungsgemäßen Optik-Trägerkörpers 10 als Teil eines elektro-optischen Messgerätes.

Der Optik-Träger 10 weist eine Reihe von Aufnahmen für optische und/oder elektronische Komponenten des Messgeräts auf. So besitzt der Optik-Träger 10 an der in Messrichtung zeigenden Seite eine Aufnahme für ein Austrittsfenster sowie eine Aufnahme für eine Empfangsoptik, die das reflektierte Empfangsmesssignal auf einen Empfänger bündelt. Die nach unten zeigende Seite des Optik-Trägers 10 ist zur Aufnahme einer Leiterplatte, auf welcher z.B. elektronische Komponenten einer Auswerteeinheit und der Empfänger aufgebracht sind, ausgebildet. Des Weiteren weist der Optik-Trägerkörper 10 einen tubusförmigen Sendekanal 23 und einen tubusförmigen Empfangskanal 28 auf, die die Sende- bzw. Empfangsmessstrahlen gegenüber dem Gehäuseinnenraum des Messgeräts abschotten. Am oder im Empfangskanal kann dabei ein Umlenkmittel vorhanden sein kann, das die empfangenen Strahlen auf den Empfänger lenkt. Insbesondere kann das Umlenkmittel als Filter ausgebildet sein, sodass die optischen Messfrequenzen umgelenkt, Umgebungs- und Streulicht jedoch nicht in Richtung des Empfängers umgelenkt werden. Zusätzlich weist der Optik-Trägerkörper 10 noch eine Aufnahme 15 für ein weiteres Modul, beispielsweise für eine Digitalkamera, auf.

Am entgegengesetzt der Messrichtung zeigenden Ende des Sendekanals 23 ist eine Anbringung eines Senders, der z.B. als Laserdiode auf einer kleinen Leiterplatte ausgebildet ist, vorgesehen.

Der Sendekanal 23 und der Empfangskanal 28 sind insbesondere nebeneinander und parallel zueinander angeordnet, wobei dann die Anbringung des Senders derart vorgesehen ist, dass der Sendestrahl in Richtung der Längsachse des Sendekanals verläuft. Die Richtung des Sendestrahls definiert dabei die optische Achse 11 des Optik-Trägerkörpers 10, die so justiert werden kann, dass sie parallel zur Längsachse des Messgeräts ausgerichtet ist.

Insbesondere weist der gezeigte Optik-Träger 10 zwei kleine jeweils seitlich ausgeformte Stifte 16 auf, durch welche der Optik-Träger 10 in einem Messgerätgehäuse kippbar gelagert werden kann. Ebenso ist an der Hinterseite eine Stellschraubenöse 13 ausgeformt, an der der Optik-Trägerkörper 10 mittels einer Stellschraube so im Messgerätgehäuse fixiert werden kann, dass eine entsprechende Kippstellung einstellbar ist.

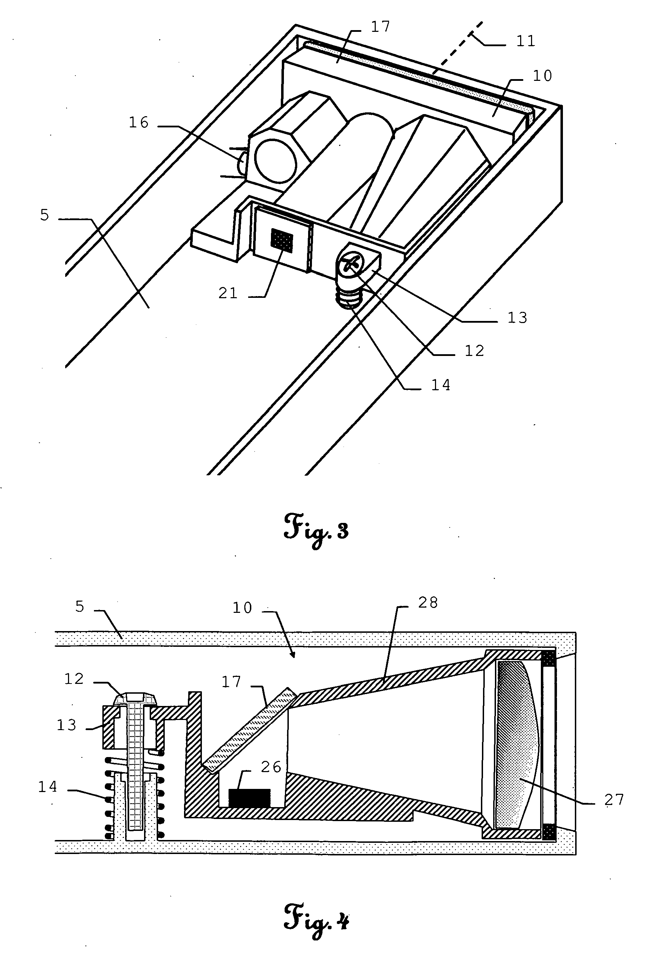

Figur 3 zeigt den Optik-Trägerkörper 10 aus Figur 2, der bereits in einem offen dargestellten Gehäuse 5 eines handgehaltenen elektro-optischen Messgeräts eingesetzt ist. Weitere Komponenten des Messgeräts, wie z.B. Batterien, Display, Eingabe-Einheit oder Auswerteeinheit, sind zum einfacheren Verständnis nicht dargestellt und sind dem Fachmann bekannt.

Der in Figur 3 gezeigte Optik-Trägerkörper 10 weist erfindungsgemäss eine Vorrichtung zum Justieren der optischen Achse des Optik-Trägerkörpers 10 relativ zum Gehäuse 5 des Messgeräts in einer vertikalen Ebene auf. Dazu ist der Optik-Träger 10 an seitlichen, eine Kippachse bildenden Stiften 16 im Messgerätgehäuse 5 gelagert und somit um diese Kippachse geringfügig schwenkbar befestigt. Durch die Öse 13 kann der Optik-Träger 10 mittels einer Stellschraube 12 am Gehäuse 5 fixiert werden, wobei durch Drehen der Stellschraube 12 eine gewünschte Kippstellung des Optik-Trägerkörpers 10 relativ zum Gehäuse 5 einstellbar ist. Insbesondere wird eine Kippstellung so gewählt, dass die optische Achse 11 des Optik-Trägerkörpers 10 parallel zur Gerätelängsachse verläuft und somit ein intuitives Zielen durch einen Benutzer ermöglicht wird. Zwischen der Öse 13 und dem Gehäuse 5 befindet sich insbesondere eine vorgespannte Feder 14, sodass die Kippstellung fixiert ist. Bei beispielsweise einem Lösen der Stellschraube 12 wird der Optik-Trägerkörper 13 durch die Federkraft an der Öse 13 nach oben gedrückt und somit relativ zum Gehäuse 5 gekippt.

Eine erfindungsgemäss ermöglichte präzise Justierung des Optikträgers 10 bzw. dessen optischer Achse 11 relativ zum Gehäuse 5 des Messgeräts - beispielsweise mit einer Winkelgenauigkeit von mindestens 0,05° - ist insbesondere für eine Ausführungsform des Messgeräts 1 mit integriertem Neigungssensor vorteilhaft. Durch eine hochpräzise Justage der optischen Achse 11 des Optikträgers in Richtung der Längsachse des Messgerätgehäuses 5 kann der technische Effekt erzielt werden, dass das erfindungsgemässe Messgerät 1 zusätzlich sowohl eine hochgenaue Wasserwaagenfunktion als auch eine schräge Distanzmessfunktion erfüllen kann. Der - entweder am Optikträger 10 oder direkt am Gehäuse 5 montierte - Neigungssensor kann erfindungsgemäss in diesem Fall zur hochpräzisen Neigungsmessung sowohl des Gehäuses 5 als auch der optischen Achse 11 des ausgesendeten Distanzmess-Strahls verwendet werden.

Z.B. ist das Gehäuse 5 des Messgeräts im Wesentlichen quaderförmig ausgebildet, sodass bei Auflegen des Messgeräts 1 auf eine Test-Oberfläche eines Körpers die Neigung der Test-Oberfläche präzise anhand des - insbesondere optisch-elektronischen - Neigungssensors bestimmt werden kann. In diesem Fall dient das Messgerät 1 als hochgenaue handliche elektronische Wasserwaage.

Zum anderen kann bei einem schrägen Anmessen einer Distanz zu einer Wand unter Miteinbeziehung des aktuell gemessenen Neigungswinkels und der gemessenen Schrägdistanz die horizontale, ebene Entfernung zur Wand bestimmt und im Display ausgegeben werden. Dadurch kann erfindungsgemäss in einem Gerät sowohl eine präzise Schrägmessfunktion als auch die oben erwähnte hochgenaue Wasserwaagenfunktion ermöglicht werden.

Zudem kann der Neigungssensor bereits zur Unterstützung der erfindungsgemässen exakten Justage der optischen Achse 11 des Optikträgers 10 relativ zur - für die Wasserwaagenfunktion vorgesehenen - Auflagefläche des Gehäuses 5 verwendet werden.

Des Weiteren ist in Figur 3 am Optik-Trägerkörper 10 eine Leiterplatte mit einer Laserdiode als Sender 21 montiert.

Der Optik-Trägerkörper 10 ist an der in Messrichtung zeigenden Seite mit formflexiblem Schaumgummi 17 ausgekleidet, sodass er sitzfest und dennoch beweglich derart im Gehäuse 5 gelagert ist, dass die Kippbarkeit zur Justierung gewährleistet wird.

Figur 4 zeigt einen Längsschnitt eines in einem Messgerätgehäuse 5 kippbar montierten Optik-Trägerkörpers 10 mit der Empfangsoptik 27, einem Empfangskanal 28 und einem Umlenkmittel 17 zum Lenken der reflektierten Messsignale auf den Empfänger 26. Des Weiteren weist der Optik-Trägerkörper 10 eine Öse 13 zur Aufnahme einer Stellschraube 12 auf, die durch die Öse 13 in das Messgerätgehäuse 5 gedreht ist. Zwischen der Öse 13 und dem Messgerätgehäuse 5 befindet sich eine vorgespannte Feder 14, sodass bei einem Lösen der Stellschraube der Optik-Trägerkörper 10 durch die Feder 14 nach oben gedrückt und somit gekippt wird.

Es versteht sich, dass diese dargestellten Figuren nur mögliche Ausführungsbeispiele schematisch darstellen. Die verschiedenen Ansätze können erfindungsgemäss miteinander sowie mit Vorrichtungen des Stands der Technik kombiniert werden.

## Patentansprüche

1. Handhaltbares elektro-optisches Messgerät (1), dessen Form eine Längsachse definiert, zur berührungslosen Entfernungsmessung,
mit mindestens
• einem Messgerätgehäuse (5),
• einem optischen Sendepfad (20), der zumindest einen optischen Sender (21) zur Aussendung eines Messsignals (24) aufweist,
• einem Empfangspfad (25) mit zumindest einer Empfangsoptik (27) zur Bündelung eines Messsignals in Richtung auf einen Empfänger (26), sowie mit
• einem Komponenten von Sende- und Empfangspfad aufnehmenden Optik-Trägerkörper (10) mit einer optischen Achse (11),
**dadurch gekennzeichnet, dass**
der Optik-Trägerkörper (10) relativ zum Messgerätgehäuse (5) geringfügig kippbar angeordnet ist, sodass die optische Achse (11) in mindestens einer Ebene relativ zum Messgerätgehäuse (5) derart justierbar ist, und die Kippstellung des Optik-Trägerkörper (10) relativ zum Messgerätgehäuse (5) so gewählt wird, dass die optische Achse (11) parallel zur Längsachse des Messgeräts ausgerichtet ist.

2. Elektrooptisches Messgerät nach Anspruch 1,
**dadurch gekennzeichnet, dass**
der Optik- Trägerkörper (10) einstückig ausgebildet ist.

3. Elektrooptisches Messgerät nach Anspruch 1 oder 2,
**dadurch gekennzeichnet, dass**
die optische Achse (11) in mindestens einer Ebene relativ zum Messgerätgehäuse (5) rejustierbar ist.

4. Elektro-optisches Messgerät (1) nach einem der vorangehenden Ansprüche,
**dadurch gekennzeichnet, dass**
eine Kippstellung des Optik-Trägerkörpers (10) relativ zum Messgerätgehäuse (5) mittels einer Stellschraube (12) einstellbar ist.

5. Elektro-optisches Messgerät (1) nach Anspruch 4,
**dadurch gekennzeichnet, dass**
der Optik-Trägerkörper (10) eine Stellschraubenöse (13) aufweist, an welcher der Optik-Trägerkörper (10) am Messgerätgehäuse (5) durch die Stellschraube (12) befestigt ist.

6. Elektro-optisches Messgerät (1) nach Anspruch 5,
**dadurch gekennzeichnet, dass**
sich um die Stellschraube (12) herum zwischen dem Messgerätgehäuse (5) und der Stellschraubenöse (13) eine vorgespannte Feder (14) befindet.

7. Elektro-optisches Messgerät (1) nach einem der vorangehenden Ansprüche,
**dadurch gekennzeichnet, dass**
der Optik-Trägerkörper (10) mindestens teilweise durch formflexiblen Schaumgummi (17) ausgekleidet ist.

8. Elektro-optisches Messgerät (1) nach einem der vorangehenden Ansprüche,
**dadurch gekennzeichnet, dass**
der Optik-Trägerkörper (10) zusätzlich einen Neigungssensor trägt.

9. Elektro-optisches Messgerät (1) nach einem der vorangehenden Ansprüche,
**dadurch gekennzeichnet, dass**
das Messgerätgehäuse (5) einen Neigungssensor aufweist, der fix mit dem Messgerätgehäuse (5) verbunden ist.

10. Elektro-optisches Messgerät (1) nach einem der vorangehenden Ansprüche,
**dadurch gekennzeichnet, dass**
der Optik-Trägerkörper (10) derart im Messgerätgehäuse (5) gelagert ist, dass die optische Achse (11) in mehreren Ebenen justierbar ist.

11. Elektro-optisches Messgerät (1) nach einem der vorangehenden Ansprüche,
**dadurch gekennzeichnet, dass**
der Optik-Trägerkörper (10) aus mittels Thixomolding geformtem Leichtmetall besteht.

12. Elektro-optisches Messgerät (1) nach Anspruch 11,
**dadurch gekennzeichnet, dass**
der Optik-Trägerkörper (10) aus einer mittels Thixomolding geformten Magnesium- oder Aluminiumlegierung, besteht.

## Claims

1. Handheld electro-optical measuring device (1), the shape of which defines a longitudinal axis, for contactless distance measurement,
having at least
• a measuring device housing (5),
• an optical transmission path (20) which has at least one optical transmitter (21) for emitting a measurement signal (24),
• a reception path (25) with at least one receiving optical system (27) for focusing a measurement signal in the direction of a receiver (26), and having
• an optical system carrier body (10) which accommodates components of the transmission and reception paths and has an optical axis (11),
**characterized in that**
the optical system carrier body (10) is arranged such that it is slightly tiltable relative to the measuring device housing (5), with the result that the optical axis (11) can be adjusted in at least one plane relative to the measuring device housing (5) and the tilt position of the optical system carrier body (10) relative to the measuring device housing (5) is selected in such a manner that the optical axis (11) is oriented parallel to the longitudinal axis of the measuring device.

2. Electro-optical measuring device according to Claim 1,
**characterized in that**
the optical system carrier body (10) is integrally formed.

3. Electro-optical measuring device according to Claim 1 or 2,
**characterized in that**
the optical axis (11) can be readjusted in at least one plane relative to the measuring device housing (5).

4. Electro-optical measuring device (1) according to one of the preceding claims,
**characterized in that**
a tilt position of the optical system carrier body (10) relative to the measuring device housing (5) can be set using a setting screw (12).

5. Electro-optical measuring device (1) according to Claim 4,
**characterized in that**
the optical system carrier body (10) has a setting screw eyelet (13) at which the optical system carrier body (10) is fastened to the measuring device housing (5) using the setting screw (12).

6. Electro-optical measuring device (1) according to Claim 5,
**characterized in that**
a prestressed spring (14) is situated around the setting screw (12) between the measuring device housing (5) and the setting screw eyelet (13).

7. Electro-optical measuring device (1) according to one of the preceding claims,
**characterized in that**
the optical system carrier body (10) is at least partially lined with dimensionally flexible foam rubber (17).

8. Electro-optical measuring device (1) according to one of the preceding claims,
**characterized in that**
the optical system carrier body (10) additionally has an inclination sensor.

9. Electro-optical measuring device (1) according to one of the preceding claims,
**characterized in that**
the measuring device housing (5) has an inclination sensor which is fixedly connected to the measuring device housing (5).

10. Electro-optical measuring device (1) according to one of the preceding claims,
**characterized in that**
the optical system carrier body (10) is mounted in the measuring device housing (5) in such a manner that the optical axis (11) can be adjusted in a plurality of planes.

11. Electro-optical measuring device (1) according to one of the preceding claims,
**characterized in that**
the optical system carrier body (10) consists of light metal shaped using thixomoulding.

12. Electro-optical measuring device (1) according to Claim 11,
**characterized in that**
the optical system carrier body (10) consists of a magnesium or aluminium alloy shaped using thixomoulding.

## Revendications

1. Appareil de mesure électro-optique (1) pouvant être tenu à la main dont la forme définit un axe longitudinal pour la télémétrie sans contact avec au moins
• un boîtier d'appareil de mesure (5),
• une voie d'émission optique (20) qui présente au moins un émetteur optique (21) pour l'émission d'un signal de mesure (24),
• une voie de réception (25) avec au moins une optique de réception (27) pour la mise en faisceau d'un signal de mesure en direction d'un émetteur (26) ainsi qu'avec
• un composant de corps de support d'optique (10) avec un axe optique (11), composant qui loge des components de la voie d'émission et de la voie de réception,
**caractérisé en ce**
**que** le corps de support d'optique (10) est placé légèrement basculant par rapport au boîtier de l'appareil de mesure (5) si bien que l'axe optique (11) peut être ajusté par rapport au boîtier de l'appareil de mesure (5) dans au moins un plan et la position de basculement du corps de support d'optique (10) par rapport au boîtier de l'appareil de mesure (5) est sélectionnée de telle manière que l'axe optique (11) est orienté parallèlement à l'axe longitudinal de l'appareil de mesure.

2. Appareil de mesure électro-optique selon la revendication 1,
**caractérisé en ce**
**que** le corps de support d'optique (10) est configuré en une pièce.

3. Appareil de mesure électro-optique selon la revendication 1 ou 2,
**caractérisé en ce**
**que** l'axe optique (11) est réajustable par rapport au boîtier de l'appareil de mesure (5) dans au moins un plan.

4. Appareil de mesure électro-optique (1) selon l'une des revendications précédentes,
**caractérisé en ce**
**qu'**une position de basculement du corps de support d'optique (10) par rapport au boîtier de l'appareil de mesure (5) est réglable au moyen d'une vis de réglage (12).

5. Appareil de mesure électro-optique (1) selon la revendication 4,
**caractérisé en ce**
**que** le corps de support d'optique (10) présente un oeillet de vis de réglage (13) auquel le corps de support d'optique (10) est fixé sur le boîtier de l'appareil de mesure (5) par la vis de réglage (12).

6. Appareil de mesure électro-optique (1) selon la revendication 5,
**caractérisé en ce**
**qu'**un ressort précontraint (14) se trouve autour de la vis de réglage (12) entre le boîtier de l'appareil de mesure (5) et l'oeillet de la vis de réglage (13).

7. Appareil de mesure électro-optique (1) selon l'une des revendications précédentes,
**caractérisé en ce**
**que** le corps de support d'optique (10) est revêtu au moins partiellement par du caoutchouc mousse déformable (17).

8. Appareil de mesure électro-optique (1) selon l'une des revendications précédentes,
**caractérisé en ce**
**que** le corps de support d'optique (10) porte en plus un capteur d'inclinaison.

9. Appareil de mesure électro-optique (1) selon l'une des revendications précédentes,
**caractérisé en ce**
**que** le boîtier de l'appareil de mesure (5) présente un capteur d'inclinaison qui est relié de manière fixe au boîtier de l'appareil de mesure (5).

10. Appareil de mesure électro-optique (1) selon l'une des revendications précédentes,
**caractérisé en ce**
**que** le corps de support d'optique (10) est positionné dans le boîtier de l'appareil de mesure (5) de telle manière que l'axe optique (11) est ajustable dans plusieurs plans.

11. Appareil de mesure électro-optique (1) selon l'une des revendications précédentes,
**caractérisé en ce**
**que** le corps de support d'optique (10) est constitué par du métal léger moulé par thyxoformage.

12. Appareil de mesure électro-optique selon la revendication 11,
**caractérisé en ce**
**que** le corps de support d'optique (10) est constitué par un alliage de magnésium ou d'aluminium moulé par thyxoformage.
